(19) **Europäisches Patentamt / European Patent Office / Office européen des brevets**

(11) **EP 1 665 167 B1**

(12) **EUROPEAN PATENT SPECIFICATION**

(45) Date of publication and mention
of the grant of the patent:
**18.07.2007 Bulletin 2007/29**

(51) Int Cl.:
***G06T 15/40*** *(2006.01)*

(21) Application number: **04766719.1**

(22) Date of filing: **06.09.2004**

(86) International application number:
**PCT/EP2004/052059**

(87) International publication number:
**WO 2005/024727 (17.03.2005 Gazette 2005/11)**

(54) **METHOD FOR DETERMINING REFLECTIONS IN AN AREA.**

VERFAHREN ZUR BESTIMMUNG VON REFLEKTIONEN IN EINEM BEREICH.

PROCEDE DE DETERMINATION DE REFLEXIONS DANS UNE AIRE

(84) Designated Contracting States:
**AT BE BG CH CY CZ DE DK EE ES FI FR GB GR HU IE IT LI LU MC NL PL PT RO SE SI SK TR**

(30) Priority: **08.09.2003 IT MI20031719**

(43) Date of publication of application:
**07.06.2006 Bulletin 2006/23**

(73) Proprietor: **Politecnico Di Milano
20133 Milano (IT)**

(72) Inventors:
• **TUBARO, Stefano**
**I-28100 Novara (IT)**
• **SARTI, Augusto**
**I-20038 Seregno (MI) (IT)**
• **FOCO, Marco**
**I-20099 Sesto San Giovanni (MI) (IT)**

(74) Representative: **Mittler, Enrico
Mittler & C. s.r.l.,
Viale Lombardia, 20
20131 Milano (IT)**

(56) References cited:
• **MARCO FOCO, PIETRO POLOTTI, AUGUSTO SARTI, STEFANO TUBARO: "SOUND SPATIALIZATION BASED ON FAST BEAM TRACING IN THE DUAL SPACE" PROC. OF THE 6TH INT. CONFERENCE ON DIGITAL AUDIO EFFECTS, 8 September 2003 (2003-09-08), pages DAFX 1-DAFX 5, XP002317042 LONDON, UK**
• **BITTNER J ET AL: "Exact regional visibility using line space partitioning" COMPUTERS AND GRAPHICS, PERGAMON PRESS LTD. OXFORD, GB, vol. 27, no. 4, August 2003 (2003-08), pages 569-580, XP004441307 ISSN: 0097-8493**
• **VLADLEN KOLTUN, YIORGOS CHRYSANTHOU, DANIEL COHEN-OR: "Hardware-Accelerated from-Region Visibility Using a Dual Ray Space" PROCEEDINGS OF THE 12TH EUROGRAPHICS WORKSHOP ON RENDERING TECHNIQUES, [Online] 25 June 2001 (2001-06-25), pages 205-216, XP002317043 LONDON, UK ISBN: 3-211-83709-4 Retrieved from the Internet: URL: http://www.cs.ucy.ac.cy/~yiorgos/publi cations/ray_space01.pdf> [retrieved on 2005-02-10]**
• **AUGUSTO SARTI AND STEFANO TUBARO: "Efficient geometry-based sound reverberation" PROC. OF EUSIPCO 2002, XI EUROPEAN SIGNAL PROCESSING CONFERENCE, 3 September 2002 (2002-09-03), XP009043689 TOULOUSE, FRANCE**

EP 1 665 167 B1

## Description

The present invention refers to a method for determining reflections in complex environments, by means of ray tracing.

The rapid tracing of rays, that follow reflection laws similar to geometric optics laws, is a problem of considerable interest in numerous fields of application. In particular, the techniques capable of carrying out this operation find immediate application in the simulation of acoustic reverberations in complex environments, in the photo-realistic rendering of models of three-dimensional scenes, or in the prediction of the electromagnetic propagation of wireless systems in the presence of multiple reflections.

The acoustic or electromagnetic path curves follow paths that, with excellent approximation, meet the geometric optics laws. According to these laws, a ray that has an incidence on a planar reflector with angle $\alpha$ in relation to the normal to the plane is reflected by this in coplanar direction with the plane formed by the incidence vector and the vector normal to the reflector, which results specular in relation to the latter vector (output angle equal to a $-\alpha$). A ray can undergo many reflections by the walls present in the environment, each time diminishing until it becomes of negligible entity. Given a source and a receiver however located in an environment with various reflectors, many paths can exist (in direct or indirect visibility) that connect these points.

There are various approaches to the problem of tracing rays, such as the image sources method, the ray tracing method, and the beam tracing method.

The image sources method calculates the paths corresponding to specular reflections considering the virtual sources obtained through the specular reflection of the sources in relation to all the polygons that represent the reflectors of the environment. For each virtual source a specular reflection path can be constructed through the iterative intersection of a rectilinear segment that links source with receiver through the existing reflection planes. The specular reflection paths can be calculated up to an arbitrary order through the recursive generation of virtual sources. The main advantage of the image method is its solidity, as it guarantees that all the required paths are determined up to a pre-assigned reflection order. Against this, the cost of calculating the method grows in exponential proportion of the reflection order and the control of the visibility conditions (to be carried out for each of the virtual sources) results to be of limited complexity only for environments that are not too complex (in fact conditions of occlusion, plausible reflection, etc. have to be considered).

The ray tracing methods are based on the direct tracing of the ray starting from the source until it reaches the receiver o vice versa. Whatever point the ray tracing starts from, these methods typically require the exploration of a finite, but high, number of output directions, to verify that a path exists that complies with the geometric optics laws and that reaches the arrival point after a certain number of reflections. However, this approach often results to be burdensome to calculate as in order to be certain not to excessively undersample the space of the possible directions to explore (and erroneously miss the arrival point), the number of tracing attempts has to be very high.

Beam tracing is capable of preventing this problem through the tracing of compact beams of rays that originated from the same source (real or virtual). This eliminates the risk of missing the arrival point in the tracing operation.

When a beam has incidence on a reflector, all the rays that compose it are reflected according to the geometric optics laws forming a reflected beam that results in coinciding with the specular version (in relation to the surface of the reflector) of the beam that would be obtained if the reflector was not present.

In general, however, the beam has incidence only in part on the reflector, with the result that only a portion thereof is reflected while the remaining part proceeds undisturbed in its original path. In this case the beam separates into two or more sub-rays in correspondence with the reflector. To carry out beam tracing thus means to construct the tree of the reflections and of their branches that the beam undergoes in its path in space. Clearly, the ray undergoes a natural attenuation that grows with the increase of the length of the path followed. A further attenuation is introduced by the reflection walls. This enables the growth of the tree to be interrupted where the attenuation of the beams reaches a preset threshold.

The reflection tree or beam tree is constructed so as to gather in gerarchic mode all the information needed for the reconstruction of the acoustic paths existing between the source and an arbitrary point. In particular, for each branch point of the tree the position of the source (real or virtual) that generates the reflection to that branch point has to be specified, the geometrical parameters that characterise the extension of the beam, and the information need to identify the reflector - if any - on which the beam will have incidence in following its path. It is assumed, without loss of generality, that the beam has been preliminarily divided into adjoining sub-beams.

Once the beam tree associated to a given position of the source has been constructed, the determination of all the beams that hit a certain point of the space (receiver) is immediate. Going back up the tree it is then possible to derive the direct or reflected paths that link it to the source. This operation results, in fact, in being very rapid as it only requires consultation of the data structure used to memorise the beam tree.

The article "Exact regional visibility using line space partitioning" of Bittner et al. COMPUTERS AND GRAPHICS, PERGAMON PRESS LTD, OXFORD, GB, vol. 27, no.4, August 2003(2003-08), pages 569-580, XP04441307 ISSN: 0097-8493 discloses a method for computing visibility from a polygonal region in the plane considering a set of line segments as occluders. The sets of occluded rays using a hierarchical partitioning of dual space (line space) is represented and the line space partitioning is maintained by a BSP tree that provides efficient operations on the sets of lines.

The article "Efficient geometry-based sound reverberation" of Augusto Sarti and Stefano Tubaro, PROC. OF EUSIPICO 2002, XI EUROPEAN SIGNAL PROCESSING CONFERENCE, 3 September 2002 (2002-09-03), - 6 September (2002-09-06) XP009043689 TOULOUSE, FRANCE discloses a method that allows to significantly speed-up the construction of the beam tree in beam tracing applications, by avoiding space subdivision. This allows to dynamically recompute the beam tree as the sound source moves. In order to speed-up the construction of the beam tree, the portion of which reflectors the beam "illuminates" by performing visibility checks in the "dual" of geometric space is determined.

The article "Hardware accelerated from region visibility using a dual ray space" of Vladlen Koltun, Yiorgos Chrysanthou, Daniel Cohen-or, Proceedings of the 12th Eurographics Workshop on rendering techniques, 25 June 2001 (2001-06-25), pages 205-216, XP02317043, London, UK ISBN: 3-211-83709-4, discloses a from-region visibility algorithm allowing to conduct remote walkthroughs in very large virtual environments, without pre-processing and storing prohibitive amounts of visibility information.

It can be seen however that a movement of the source or even of only one of the reflectors entails the recalculation of the tree, an operation that is generally more burdensome than its simple consultation.

In view of the state of the technique described, object of the present invention is to speed up the construction of the beam tree when the source moves, through the separation of the phases of analysis of the visibility and tracing of the beams.

In its first aspect the present invention refers to a method for determining the region of visibility as defined in claim 1.

Preferably, the affine transformation comprises the execution of a rotatory translation of said system of coordinates $(x, y, z)$ so that said first reflector is placed on the plane $x = 0$.

Preferably, the affine transformation comprises the execution of a scaling down of said system of coordinates $(x, y, z)$ so that said first reflector assumes a preset dimension.

In particular the method is characterised in that it represents said first reflector and second reflector in a system of coordinates $(x, y)$ by means of segments; carrying out an affine transformation of said system of coordinates $(x, y)$ capable of bringing said first reflector to assuming coordinates of the extremes in the points $(0, m)$ and $(0, n)$ with $m < n$; representing said second reflector by means of the following system of equations $x$ = $et + f$, $y = gt + h$, with $0 \leq t \leq 1$; representing a generic straight line by means of the parameters $a, b$ of the equation $y = a x + b$; determining the region of visibility by determining all the straight lines that pass through a generic point of the first and of the second reflector combining the previous equations and obtaining the following system $g t + h = a (e t + f) + b$, with $0 \leq t \leq 1$ and with $m \leq b \leq n$.

In its second aspect the present invention refers to a method for determining a beam tree of the beams of the rays on a plurality of reflectors that comprises the phases of prior determination of the set of the regions of visibility from each reflector in accordance with the previously described method.

Advantageously, the method for determining a beam tree of the beams of the rays on a plurality of reflectors comprises the phases of prior determination of the visibility diagram in accordance with the previously described method, positioning a source in a system of coordinates $(x, y)$; determining the areas of the reflectors illuminated by said source in said system of coordinates $(x, y)$; memorising the coordinates of said areas of the reflectors illuminated by said source; representing a virtual source for each reflector illuminated; applying said affine transformation of said system of coordinates $(x, y)$ to said virtual source and to said illuminated region; said transformed illuminated region is represented by means of a segment of extremes $(0, b_0)$ and $(0, b_1)$; representing said transformed virtual source in the space of the parameters $(a, b)$ by means of the equation $y = a x + b$, and the illuminated region by means of the disequation $b_0 \leq b \leq b_1$; the system of equations $y = a x + b$ and $b_0 \leq b \leq b_1$ represents a segment of illumination in the space of the parameters $(a, b)$; intersecting said segment of illumination with said visibility diagram obtaining sub-segments and thus sub-intervals of the interval $b_0 \leq b \leq b_1$; said sub-intervals will represent portions of the illuminated region and each one will illuminate a new reflector.

In its third aspect the present invention refers to a program for computer comprising a program code that carries out all the phases of the method for determining the region of visibility between at least a first reflector and/or of the method for determining a beam tree when the program is carried out on a computer.

In its fourth aspect the present invention refers to a program for computer recorded on a support that can be used by a computer for controlling the execution of all the phases of the method for determining the region of visibility between at least a first reflector and/or of the method for determining a beam tree.

The present invention permits to carry out the bulkiest calculation operations of assessment of the visibility in a preliminary phase that considers only the reciprocal positions of the reflectors, independently from the position of the source. The visibility is in fact redefined in a suitable parametric space, where the information for its assessment can be organised under the form of diagrams. The construction of the beam tree is then carried out each time the source moves, using the precalculated information of visibility.

The characteristics and advantages of the present invention will appear evident from the following detailed description of an embodiment thereof, illustrated as non-limiting example in the enclosed drawings, in which:

> Figures 1a, 1b and 1c show an example of rotatory-translation, of normalization and transformation from a space with coordinates (x, y) to a space with parameters (a, b);
> Figures 2a and 2b show an example of construction of the visibility diagram;
> Figures 3a and 3b show an example of construction of a level of the beam tree.

As the method herein proposed refers to the tracing of paths that follow the geometric optics laws, phenomenon such as diffraction will not be considered, which occurs when the dimensions of the reflectors become comparable with the wavelength of the wave that propagates in the environment. This assumption, even though correct in the case of high frequency electromagnetic waves (light or microwaves), results only approximately satisfied in the case of the propagation of acoustic waves, and in fact it has been calculated that these models are valid for simulations above 150Hz (corresponding to the wavelength of approximately 2 metres, a length that starts to be comparable with the dimensions of the walls of a living or working environment). In addition, even though it is true that sufficiently wide walls reflect in an almost specular manner, rough edges of rigid reflectors tend to generate a diffraction that is not negligible. In particular, small objects (a vase, a cup, etc.) tend to have significant effects on the acoustic field for sounds whose frequency is above 4kHz. These objects, however, are not generally considered in the modellation of acoustic environments.

For simplicity of description, hereinafter the phenomenon of the transmission through the walls will also be neglected. Hereinafter it will be illustrated how it is possible to take account of it through simple modifications of the method illustrated herein.

The entities that we shall now consider are the sources, the receiver and the reflectors.

It is assumed that the sources and receivers are pointed elements, while the reflection walls are described by segments in the two-dimensional case and by portions of polygonal planes, for example triangles, in the three-dimensional case. Each wall of reflection defines two reflectors, one for each side. This distinction, as will be seen, is substantial in that it has consequences on the choice of parameters that characterise the visibility.

We can say that a source "illuminates" a point if there is a direct path that links them. With the term "virtual source" we intend the specular reflection of a real source in relation to a reflecting wall. In addition that region of a reflector that is directly illuminated by the source considered is defined "active". The active portion of a reflector can be composed of one or more active segments (also disconnected because of possible partial occlusions). Each of the active segments generates a new reflected beam.

Identifying the reflectors present in the environment with a whole index i, the visibility is defined as a function that associates the index of the visible reflector to a view point and to a view direction. This function is thus defined in the space of the parameters that characterise view point and direction, and is constant at times. The visibility from a reflector is thus defined as the visibility function from all points of the reflector itself.

The assessment of the visibility of an environment, that is of a set of reflectors, consists in the construction of the visibility functions associated to all the reflectors of the environment. As it is assumed that the reflecting walls reflect on both sides, the visibility of an environment composed of M walls will be characterised by 2M visibility functions.

The preliminary assessment procedure of the visibility of the environment through the construction of the visibility by the generic reflector is now illustrated. To be able to conveniently define the space of the parameters on which the visibility function assumes values, it is preferable to carry out a affine transformation of the geometric space that leads the reflector to assume preselected position, orientation and, finally, shape.

As previously illustrated, the visibility function assumes values on the space of the parameters that characterise a view point and direction. If the point lies on the reflector, the space of the parameters will be four-dimensional in the case of three-dimensional environments, or two-dimensional in the case of two-dimensional environments. We assume that the geometric space has been preliminarily submitted to affine transformation that brings the reflector to lie on plane x = 0, with reflecting face turned towards the semi-axis $x \geq 0$. A convenient parametizing for view point and direction is thus given by the system of equations

$$y = a\,x + b$$

$$z = c\,x + d$$

where the couple of parameters (b, d) identifies the view point on the plane (y, z) of the reflector, while the couple of parameters (a, c) defines the view direction. In the case of two-dimensional environments only the first of the two equations has to be considered, and the parameters a and b will identify the view direction and point respectively.

For reasons of simplicity of description, we will limit ourselves for the moment to consider only the case of two-dimensional environments. In this case, the affine transformation of the geometric space can be defined simply as a rotatory-translation with scaling down that transforms the reflector in the segment that links the points(0, -1) and (0, 1), with reflection face turned towards the semi-axis $x \geq 0$. This enables the space of the parameters at the interval $-1 \leq b \leq 1$ to be limited. The visibility function will thus be a constant function at times in the space (a, b), where the values identify the visible reflectors.

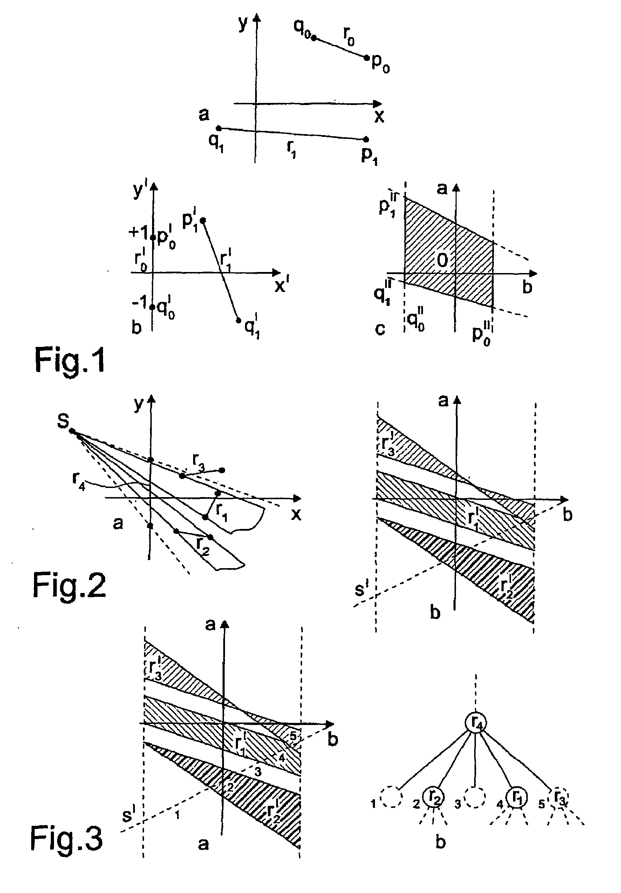

We will consider two reflectors $r_0$ and $r_1$, having as references respectively $q_0$, $p_0$ and $q_1$, pi, located casually in a space with coordinates (x, y), as shown in Figure 1a.

We roto-translate the reflectors placing the reflector $r_0$ in question to coincide with the vertical axis y (x=0). We normalize, again for practicality, the reflectors, that is the segment having as references $p'_0$ and $q'_0$ of coordinates (0, 1) and (0, -1) has been chosen as representation of the reflector $r_0$. Thus a representation of the reflectors as shown in Figure 1b is obtained. Representing the reflectors in the space of the parameters (a, b) the diagram in Figure 1c is obtained.

In the space of the parameters (a, b), in Figure 1c, the space o comprised between the four straight lines $p''_0$, $p''_1$, $q''_0$, $q''_1$ represents the visibility of $r'_1$ from $r'_0$.

We define the region of visibility of a generic reflector in relation to the reflector of reference as that region of the space of the parameters (a, b) to which view points and directions from which that reflector is visible correspond. As occlusions by other reflectors can occur, this region can result empty, or composed of one or more convex polygons. In each region of visibility the visibility function will obviously result to be constant. Vice versa, the region of visibility associated to the umpteenth reflector, corresponds to the region in which the function assumes value i. It is in addition useful to define the region of potential visibility of a reflector in comparison to the reference reflector, like the region of visibility calculated in absence of all the other reflectors. The effective region of visibility will be justly contained in the region of potential visibility, as the regions of potential visibility of all the reflectors can overlap.

The construction of the visibility function associated to a reference reflector is carried out in two successive phases: first the regions of potential visibility of the single reflectors are assessed, then the regions of effective visibility are assessed through determinations of the reciprocal occlusions.

For determining the region of potential visibility of the generic reflector compared to the reference reflector, the parameters of all the straight lines that start from any point of the reference reflector (in positive direction) and have incidence on the reflecting side of the reflector considered at any point are determined To this object, first of all the generic reflector is defined with the couple of equations:

$$x = e\,t + f$$

$$y = g\,t + h$$

where t is a parameter comprised between 0 and 1. Replacing these expressions in the equation y = ax + b we obtain a region in the space of the parameters characterised by:

$$g\,t + h = a\,(e\,t + f) + b, \; 0 \leq t \leq 1$$

$$-1 \leq b \leq 1$$

This region results to be thus the intersection between a beam of semistraight lines and the reference strip $-1 \leq b \leq 1$.

When the areas of potential visibility of two reflectors overlap each other in the space of the parameters, it means that a reflector partially blocks the other in relation to the generic view point on the reference reflector. The second phase of the procedure for assessing the visibility function consists in assigning the correct index to the regions in which the regions of potential visibility overlap each other. This operation can be carried out in various ways. The most simple method consists of determining which reflector occludes all the others by means of tracing a sample view ray chosen inside the overlapping region. At the end of this operation we obtain a partitioning of the space of the parameters in areas of effective visibility, to each of which is associated at the most a visible reflector. We will call this geometric representation of the visibility function, visibility diagram.

Now we consider four reflectors $r_1$-$r_4$, and we want to determine the visibility diagram of the reflector $r_4$. Thus, we roto-translate and normalize the reflector $r_4$ and we obtain a representation in space with coordinate (x, y) as shown in Figure 2a, and in the space of the parameters (a, b) as shown in Figure 2b. We also consider a source S represented in the space of the parameters (a, b) with the straight line S'. It can be seen that in Figure 1a, the reflector $r_3$ partially occludes the reflector $r_1$. An occlusion in the space of the parameters (a, b) is represented by an overlapping of areas. Analysing the slopes of the straight lines that enclose the overlapped areas it is possible to determine in the correct way the relative visibility. In particular, the greater slope dominates the minor slope.

This operation of construction of the functions (diagrams) of visibility is carried out on all the reflectors present in the scene (two per wall) in a preliminary analysis phase.

At this point the real tracing of the beams for the construction of the beam tree can be started, an operation that is possible when the position of the source is known. As already partially anticipated, each branch point of the beam tree is associated to a beam, and is characterised by the following information: position of the real or virtual source, index and illuminated portion of the reflector on which the beam has incidence.

The present method enables in particular the construction of the upper branching of the beam tree at the first level to be sped up. The construction of the branching of the root of the tree (primary beams) can come about, as in the classic method, tracing a beam at 360 degrees from the source and verifying the occlusions in the geometric space.

The beam tracing procedure comes about in recursive mode. After having divided the beam emitted by the real source into primary beams, each associated to a reflector in visibility, they are reflected and the recursive determination of the successive branching is made.

Given a beam reflected by the umpteenth reflector, the information of the visibility diagram associated to it is used to determine the subdivision of the beam into sub-beams, one for each reflector in visibility.

In practice, the procedure is as follows: first of all the transformation used to bring the reflector associated to the beam in canonic reference position is applied to the virtual source, that brings it to lie on the left of the reflector. At this point the interval $b_0 \leq b \leq b_1$ that characterises the portion of beam that actually illuminates the reflector is determined. Then the representation of the beam on the dominium of the visibility diagram is identified.

Replacing the point identified by the virtual source in the equation $y = ax + b$ the equation of a straight line in the space of the parameters (a, b) is obtained, which together with the condition $b_0 \leq b \leq b_1$ represents a segment. Intersecting this segment with the areas that compose the visibility diagram of the reflector a series of sub-segments of the original segment is obtained, each of which represents in the geometric space a new beam that will have incidence on a single reflector. Using this information a new level of the tree will be created.

Figure 3 refers to the construction of a level of the tree, based on the reflections of the reflector $r_4$ of Figure 2. Positioning the straight line S' in the space of the parameters (a, b), this intersects the reference area ($-1 \leq b \leq 1$) in 5 sub-rays numbered from 1 to 5. The rays 1 and 3 are rays that are not reflected and proceed without limits, while the rays 2, 3 and 5 are reflected by the reflectors $r_2$, $r_1$ and $r_3$ respectively. The information relating to the position of the source that generates the reflection to that branch node, the geometric parameters that characterise the extension of the beam, and the information needed to identify the eventual reflector on which the beam will have incidence in continuing its path are associated to each branch node. In this manner the tree is created, and the process is repeated for each reflection of the rays, until the number of reflections reaches a preset number or the energy associate to the ray becomes negligible.

The information present in the beam tree enable the generation of a filter (FIR) on the basis of which paths reach the location of the listener. This updating is rapid and can be carried out frequently.

Through this process it is possible to obtain for each path its own direction of arrival (DOA), the length of the path and the list of the reflectors with which it has interacted along the path. This phase requires all the branches and the leaves of the tree to have been visited and has to be controlled if the receiver is present in the beam being considered. If the receiver is present, the direction of arrival (DOA) of the ray and the length of the path are calculated. Therefore, passing along the whole tree to the root the list of reflectors met is obtained.

Since it is impossible to produce a flow for each DOA, angular intervals have been grouped together to generate a limited number of audio flow, one per interval. Each of these angular intervals will be attributed to separate delay lines of the filter FIR, that are calculated taking into account all the paths and the relative attenuations.

The filter calculated in this manner is capable, given an anechoic source (that is a source recorded in a room without reverberation), of obtaining the result of listening to that sound in a room represented by the geometry of the reflectors.

The method allows immediate extension to the three-dimensional case. Also in the 3D case it is possible to carry out an affine transformation of the geometric space that enables the scansion interval to be preset, and to simplify the representation of the visibility function. As we will see hereinafter, without losing generalities, we will consider a geometric transformation that brings the plane on which the reflector lies to coincide with the plane x=0 and brings the polygon to assume a preset canonic form.

As already previously mentioned, the space of the parameters of the straight lines in three-dimensional environments is four-dimensional. Downstream from the geometric transformation of the polygonal reference reflector, we can express the generic straight line of the space 3D with the system of equations $y = a x + b$ and $z = c x + d$, in which (a, b, c, d) identify the space of the parameters. In this space the representation of the potential visibility is still given by set of the straight lines that have incidence on both the reflectors considered, which this time is a closed portion of the four dimensions space. For practicality, it is also possible to limit before the category of polygons that interest. A particularly advantageous choice is that of the triangles: this transformation does not remove generalities from the method, as it is always possible to represent a complex plane polygon by means of its triangulation; in addition it is quite frequent, also in Computer Graphics, that the surfaces in the three-dimensional space are modelled with triangle nets. In the case of two triangular reflectors, the region of potential visibility can be expressed in the form of 6 disequation system, needed for the set of the straight lines having incidence on both the triangles. For example, expressing the generic reflector by means of the system of equations:

$$x = a_x t + b_x s + c_x$$

$$y = a_y t + b_y s + c_y$$

$$z = a_z t + b_z s + c_z$$

$$t \geq 0$$

$$s \geq 0$$

$$t + s \leq 1$$

The system that represents the generic straight line passing through the reference reflector, previously normalized by an affine transformation that makes its three vertexes coincide with the three points (0, 0, 0), (0, 1, 0) and (0, 0, 1), is represented by the system:

$$y = a\,x + b$$

$$z = c\,x + d$$

$$b \geq 0$$

$$d \geq 0$$

$$b + d \leq 1$$

Replacing the first three equations of the first system, in the equations of the second system we obtain two equations, from which we can derive the parameters s and t in function of the variables a, b, c, d. Replacing the values of the parameters s and t in the disequations of the first system, and adding the disequations of the second system we obtain a system of 6 disequations in the parameters a, b, c, d, that delimit the area of potential visibility between the two reflectors.

In a similar manner to the two-dimensional case it is possible to decide the order of occlusion between overlapped regions of potential visibility, and thus it is possible to construct for each reflector a visibility diagram represented by a subdivision of the space of the parameters in regions of effective visibility, each of which is associated at the most to a reflector.

The representation of the source and of the illuminated area is given by describing all the straight lines that intersect it with a limited beam, obtaining a system of two equations and some disequations in the four unknown quantities, that identifies a portion of a two-dimensional subspace. The subdivision of the beam will come about in this case intersecting the areas of the visibility diagram associated to the reflector that has generated the beam with the portion of plane that represents the beam reflected in the space (a, b, c, d). The method for the construction of the tree remains thus completely similar to the two-dimensional case.

It can be noted that the choice of the transformation on the plane x = 0, both in the two-dimensional case and in the three-dimensional case, is not binding, but it has been introduced with the sole object of simplifying the exposition, placing the equations of the straight lines in an easier form.

The method for determining the visibility between reflectors and the method for determining a beam tree, herein described, can be transcribed in a program, in a well-known manner by a technician of the sector, and can be memorised on any type of memory or support (floppy, CD) and/or can be made to be carried out by a computer.

**Claims**

1.    Method for determining the region of visibility among at least a first reflector, a second and a third reflector comprising the following phases:

representing said first and second reflector in a system of coordinates (x, y, z);
carrying out an affine transformation of said system of coordinates (x, y, z);
determining the region of visibility of said second reflector in relation to said first reflector as the set of the parameters of the straight lines that link a generic point of said first reflector with a generic point of said second reflector; **characterised by** comprising the following phases:

determining the region of visibility of said second and third reflector seen from said first reflector;
in the case that there are overlapped regions of visibility tracing a semistraight line in said system of coordinates whose parameters are comprised in the overlapping region starting from said first reflector;
determining what is the succession of the intersections between said second and third reflector;
assigning the portion of overlapped region of the region of visibility to the reflector having priority succession order;
said regions of visibility representing a visibility diagram.

2. Method in accordance with claim 1 **characterised in that** said affine transformation comprises the execution of a rotatory-translation of said system of coordinates (x, y, z) so that said first reflector is placed on the plane x = 0.

3. Method in accordance with claim 1 **characterised in that** said affine transformation comprises the execution of a scaling down of said system of coordinates (x, y, z) so that said first reflector assumes preset dimension.

4. Method in accordance with claim 1 **characterised by**:

   representing said first reflector and second reflector in a system of coordinates (x, y) by means of segments;
   executing an affine transformation of said system of coordinates (x, y) capable of leading said first reflector to assume coordinates of the extremes in the points(0, m) and (0, n) with m < n;
   representing said second reflector by means of the following system of equations

   $$x = e\,t + f$$

   $$y = g\,t + h$$

   with $0 \leq t \leq 1$
   representing a generic straight line by means of the parameters a, b of the equation y = a x + b;
   determining the region of visibility determining all the straight lines that pass through a generic point of the first and of the second reflector combining the previous equations and obtaining the following system

   $$g\,t + h = a\,(e\,t + f) + b$$

   with $0 \leq t \leq 1$ and with $m \leq b \leq n$.

5. Method for determining a beam tree of beams of rays on a plurality of reflectors comprising the phases of previously determining the set of the region of visibility from each reflector in accordance with claim 1.

6. Method for determining a beam tree of beams of rays on a plurality of reflectors comprising the phases of previously determining the visibility diagram in accordance with the previous claims;
positioning a source in a system of coordinates (x, y);
determining in said system of coordinates (x, y) the areas of the reflectors illuminated by said source;
memorizing the coordinates of said areas of the reflectors illuminated by said source;
representing a virtual source for each reflector illuminated;
applying said affine transformation of said system of coordinates (x, y) to said virtual source and to said illuminated region;
said illuminated transformed region is represented by means of a segment of extremes $(0, b_0)$ and $(0, b_1)$;
representing said virtual source transformed in the space of the parameters (a, b) by means of the equation y = a x + b, and the illuminated region by means of the disequation $b_0 \leq b \leq b_1$;
the system of equations y = a x + b and $b_0 \leq b \leq b_1$ represents a segment of illumination in the space of the parameters (a, b);
intersecting said segment of illumination with said visibility diagram obtaining sub-segments and thus sub-intervals of the interval $b_0 \leq b \leq b_1$;
said sub-intervals will represent portions of the illuminated region that will each illuminate a new reflector.

7. Program for computer comprising a program code that carries out all the phases of any previous claim when said program is executed on said computer.

8. Program for computer recorded on a support that can be used by said computer for controlling the execution of all the phases of any previous claim.

**Patentansprüche**

1. Verfahren zum Bestimmen eines Sichtbarkeitsbereichs unter wenigstens einem ersten Reflektor, einem zweiten und einem dritten Reflektor, das die folgenden Schritte aufweist:

   Darstellen des ersten und des zweiten Reflektors in einem Koordinatensystem (x, y, z);
   Ausführen einer affinen Transformation des Koordinatensystems (x, y, z);
   Bestimmen des Sichtbarkeitsbereichs des zweiten Reflektors in Bezug zu dem ersten Reflektor als die Gruppe der Parameter der geraden Linien, die einen allgemeinen Punkt des ersten Reflektors mit einem allgemeinem Punkt des zweiten Reflektors verbinden; **dadurch gekennzeichnet, dass** es die folgenden Schritte aufweist:

Bestimmen des vom ersten Reflektor aus gesehenen Sichtbarkeitsbereichs des zweiten und des dritten Reflektors;

in dem Fall, dass es überlagerte Sichtbarkeitsbereiche gibt, Verfolgen einer semigeraden Linie im Koordinatensystem, dessen Parameter im überlagernden Bereich umfasst sind, beginnend ab dem ersten Reflektor;

Bestimmen, was die Reihenfolge der Schnittstellen zwischen dem zweiten und dem dritten Reflektor ist;

Zuordnen des Teilabschnitts eines überlagerten Bereichs des Sichtbarkeitsbereichs zu dem Reflektor mit einem Prioritätsreihenfolgenrang;

wobei die Sichtbarkeitsbereiche ein Sichtbarkeitsdiagramm darstellen.

2. Verfahren nach Anspruch 1, **dadurch gekennzeichnet, dass** die affine Transformation die Ausführung einer Rotationstranslation des Koordinatensystems (x, y, z) aufweist, so dass der erste Reflektor auf der Ebene x = 0 angeordnet wird.

3. Verfahren nach Anspruch 1, **dadurch gekennzeichnet, dass** die affine Transformation die Ausführung eines (proportionalen) Verkleinerns des Koordinatensystems (x, y, z) aufweist, so dass der erste Reflektor eine voreingestellte Dimension annimmt.

4. Verfahren nach Anspruch 1, **gekennzeichnet durch**:

Darstellen des ersten Reflektors und des zweiten Reflektors in einem Koordinatensystem (x, y, z) mittels Segmenten;

Ausführen einer affinen Transformation des Koordinatensystems (x, y, z), die den ersten Reflektor dahin führen kann, Koordinaten der Extremwerte bei den Stellen (0, m) und (0, n) anzunehmen, wobei m < n;

Darstellen des zweiten Reflektors mittels des folgenden Gleichungssystems

$$x = e\,t + f$$

$$y = g\,t + h$$

wobei $0 \le t \le 1$

Darstellen einer allgemeinen geraden Linie mittels der Parameter a, b der Gleichung y = a x + b;

Bestimmen des Sichtbarkeitsbereichs **durch** Bestimmen aller geraden Linien, die **durch** einen allgemeinen Punkt des ersten und des zweiten Reflektors verlaufen, **durch** Kombinieren der vorherigen Gleichungen und Erhalten des folgenden Systems

$$g\,t + h = a\,(e\,t + f) + b$$

wobei $0 \le t \le 1$ und wobei $m \le b \le n$.

5. Verfahren zum Bestimmen eines Strahlenbaums von Strahlenbündeln an einer Vielzahl von Reflektoren, das die Schritte eines vorherigen Bestimmens der Gruppe des Sichtbarkeitsbereichs von jedem Reflektor nach Anspruch 1 aufweist.

6. Verfahren zum Bestimmen eines Strahlenbaums von Strahlenbündeln an einer Vielzahl von Reflektoren, das die Schritte eines vorherigen Bestimmens des Sichtbarkeitsdiagramms nach den vorangehenden Ansprüchen aufweist;

Positionieren einer Quelle in einem Koordinatensystem (x, y);

Bestimmen der durch die Quelle beleuchteten Gebiete der Reflektoren im Koordinatensystem (x, y);

Merken der Koordinaten der durch die Quelle beleuchteten Gebiete der Reflektoren;

Darstellen einer virtuellen Quelle für jeden beleuchteten Reflektor;

Anwenden einer affinen Transformation des Koordinatensystems (x, y) auf die virtuelle Quelle und auf den beleuchteten Bereich;

wobei der beleuchtete transformierte Bereich mittels eines Segments von Extremwerten $(0, b_0)$ und $(0, b_1)$ dargestellt wird;

Darstellen der in dem Raum der Parameter (a, b) transformierten virtuellen Quelle mittels der Gleichung y = a x + b und des beleuchteten Bereichs mittels der Ungleichung $b_0 \le b \le b_1$;

wobei das Gleichungssystem y = a x + b und $b_0 \le b \le b_1$ ein Beleuchtungssegment im Raum der Parameter (a, b) darstellt;

Schneiden des Beleuchtungssegments mit dem Sichtbarkeitsdiagramm, wobei Untersegmente und somit Unterintervalle des Intervalls $b_0 \le b \le b_1$ erhalten werden;

wobei die Unterintervalle Teilabschnitte des beleuchteten Bereichs darstellen werden, die jeweils einen neuen Reflektor beleuchten werden.

7. Programm für einen Computer, das einen Programmcode aufweist, der alle Schritte von irgendeinem vorangehenden Anspruch ausführt, wenn das Programm auf dem Computer ausgeführt wird.

8. Programm für einen Computer, aufgezeichnet auf einem Träger, das durch den Computer zum Steuern der Ausführung aller Schritte von irgendeinem vorangehenden Anspruch verwendet werden kann.

**Revendications**

1. Procédé de détermination de la région de visibilité parmi au moins un premier réflecteur, un deuxième et un troisième réflecteur comprenant les phases consistant à :

représenter lesdits premier et deuxième réflecteurs dans un système de coordonnées (x, y, z) ; effectuer une transformation affine dudit système de coordonnées (x, y, z) ; déterminer la région de visibilité dudit deuxième réflecteur relativement audit premier réflecteur comme l'ensemble des paramètres des droites qui relient un point générique dudit premier réflecteur avec un point générique dudit deuxième réflecteur ; **caractérisé en ce qu'**il comprend les phases consistant à :

déterminer la région de visibilité desdits deuxième et troisième réflecteurs vus depuis ledit premier réflecteur ; dans le cas où il y a des régions de visibilité se chevauchant, tracer une demi-droite dans ledit système de coordonnées dont les paramètres sont compris dans la région de chevauchement à partir dudit premier réflecteur ; déterminer quelle est la succession des intersections entre lesdits deuxième et troisième réflecteurs ; attribuer la portion de région recouverte de la région de visibilité au réflecteur ayant un ordre de succession de priorité ;

lesdites régions de visibilité représentant un diagramme de visibilité.

2. Procédé selon la revendication 1, **caractérisé en ce que** ladite transformation affine comprend l'exécution d'une translation en rotation dudit système de coordonnées (x, y, z) de telle manière que ledit premier réflecteur est placé dans le plan x = 0.

3. Procédé selon la revendication 1, **caractérisé en ce que** ladite transformation affine comprend l'exécution d'une réduction dudit système de coordonnées (x, y, z) de telle manière que ledit premier réflecteur prend une dimension préétablie.

4. Procédé selon la revendication 1, **caractérisé par** :

la représentation dudit premier réflecteur et dudit deuxième réflecteur dans un système de coordonnées (x, y) au moyen de segments ; l'exécution d'une transformation affine dudit système de coordonnées (x, y) capable de faire prendre audit premier réflecteur les coordonnées des extrêmes aux points (0, m) et (0, n) avec m < n ; la représentation dudit deuxième réflecteur à l'aide du système d'équations suivant :

$$x = e\ t + f$$

$$y = g\ t + h$$

avec $0 \le t \le 1$ la représentation d'une droite générique au moyen des paramètres a, b de l'équation y = a x + b ; la détermination de la région de visibilité en déterminant toutes les droites qui passent par un point générique du premier et du deuxième réflecteur en combinant les équations précédentes et en obtenant le système suivant :

$$g\ t + h = a\ (e\ t + f) + b$$

avec $0 \le t \le 1$ et avec $m \le b \le n$.

5. Procédé de détermination d'un arbre de faisceaux constitué de faisceaux de rayons sur une pluralité de réflecteurs comprenant les phases consistant à déterminer au préalable l'ensemble de la région de visibilité à partir de chaque réflecteur selon la revendication 1.

6. Procédé de détermination d'un arbre de faisceaux constitué de faisceaux de rayons sur une pluralité de réflecteurs comprenant les phases consistant à déterminer au préalable le diagramme de visibilité selon les revendications précédentes ; positionner une source dans un système de coordonnées (x, y) ; déterminer dans ledit système de coordonnées (x, y) les aires des réflecteurs éclairées par ladite source ; mémoriser les coordonnées desdites aires des réflecteurs éclairées par ladite source ; représenter une source virtuelle pour chaque réflecteur éclairé ; appliquer ladite transformation affine dudit système de coordonnées (x, y) à ladite source virtuelle et à ladite région éclairée ;

ladite région transformée éclairée est représentée au moyen d'un segment d'extrémités $(0, b_0)$ et $(0, b_1)$ ;

représenter ladite source virtuelle transformée dans l'espace des paramètres (a, b) au moyen de l'équation $y = a\,x + b$, et la région éclairée au moyen de l'inégalité $b_0 \leq b \leq b_1$ ;

le système d'équations $y = a\,x + b$ et $b_0 \leq b \leq b_1$ représente un segment d'éclairage dans l'espace des paramètres (a, b) ;

mettre en intersection ledit segment d'éclairage avec ledit diagramme de visibilité pour obtenir des sous-segments et donc des sous-intervalles de l'intervalle $b_0 \leq b \leq b_1$ ;

lesdits sous-intervalles étant destinés à représenter les portions de la région éclairée qui vont éclairer chacune un nouveau réflecteur.

7. Programme pour ordinateur comprenant un code de programme qui met en oeuvre toutes les phases de l'une quelconque des revendications précédentes lorsque ledit programme est exécuté sur ledit ordinateur.

8. Programme pour ordinateur enregistré sur un support qui peut être utilisé par ledit ordinateur pour commander l'exécution de toutes les phases de l'une quelconque des revendications précédentes.

Fig.1

Fig.2

Fig.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- XP 04441307
- XP 009043689
- XP 02317043

### Non-patent literature cited in the description

- Exact regional visibility using line space partitioning. **BITTNER et al.** COMPUTERS AND GRAPHICS. PERGAMON PRESS LTD, 04 August 2003, vol. 27, 569-580
- **AUGUSTO SARTI ; STEFANO TUBARO.** Efficient geometry-based sound reverberation. *PROC. OF EUSIPICO 2002, XI EUROPEAN SIGNAL PROCESSING CONFERENCE,* 03 September 2002
- **VLADLEN KOLTUN ; YIORGOS CHRYSANTHOU ; DANIEL COHEN-OR.** Hardware accelerated from region visibility using a dual ray space. *Proceedings of the 12th Eurographics Workshop on rendering techniques,* 25 June 2001, 205-216